# EUROPEAN PATENT APPLICATION

(11) **EP 3 687 036 A1**
(43) Date of publication of application: **29.07.2020**
(21) Application number: 19206906.0
(22) Date of filing: 04.11.2019
(51) Int. Cl.: H02K 1/27, H02K 7/116, H02K 21/22

(54) **SPEED REDUCER AND MOTOR WITH SPEED REDUCER**

(30) Priority: 25.01.2019 JP 2019011649
(71) Applicant: Shinano Kenshi Kabushiki Kaisha, Nagano 386-0498 (JP)
(72) Inventor: UEHARA, Hiroshi, Ueda-shi, Nagano 386-0498 (JP)
(74) Representative: Mewburn Ellis LLP

(57) **Abstract**

The invention provides a speed reducer achieving an improvement of an output of a motor without much being restricted by axial heights of a rotor magnet and a stator core, and a reduction in thickness in an axial direction. Rotary driving of a rotor yoke (3a) having a cylindrical shape is used as an input to external gears (8a, 8b) arranged radially outward of the rotor yoke (3a), and an output member (10) provided with an internal gear (9) meshing with the external gears (8a, 8b) is rotated at a relatively reduced speed.

## Description

### Technical Field

The present invention relates to a speed reducer driven by, for example, a trochoid speed reduction method or a planetary speed reduction method, and to a motor with the speed reducer.

### Background Art

A speed reducer operated by a trochoid speed reduction method includes an annular internal gear attached to a housing, disk-shaped external gears set to have a pitch circle diameter smaller than that of the internal gear and disposed at a position inward of the internal gear, and an output member connected to the external gears to output the rotation movement of the external gears to the outside. The external gears perform a revolution movement (an oscillatory movement) by an operation transmitted from an electric motor at a position inward of an internal gear attached to the housing at a predetermined revolving speed (revolution speed) with internal teeth and external teeth meshing with each other. In association with the revolution movement (oscillatory movement), the external gears perform a rotation movement at a rotating speed (rotation speed) which is reduced in speed to a level lower than the revolution speed by meshing with the internal gear. The rotation movement of the external gears reduced in speed as described above is transmitted to the output member, and a rotation output reduced in speed is output from the output member.

The external gears are disposed in a state in which a part of the external teeth meshes with the internal teeth of a first internal gear at the position inward of the internal gear. Then, the motor starts and an input shaft rotates, whereby the external gears perform a revolution (oscillation) movement at a rotating speed input from the motor in the internal gear, and at the same time, perform a rotation movement at the rotational speed reduced by a predetermined ratio with respect to the revolution movement. The rotation movement is then transmitted to the output member via an output pin, and the output member rotates around the input shaft which rotates in association with the external gears (refer to PTL 1: JP-A-2014-81068).

### Summary of Invention

### Technical Problem

In the speed reducer according to PTL 1 described above, it is difficult to reduce the size of the motor with a speed reducer in an axial direction because the speed reducers are disposed within an installation region of the motor consecutively in an axial direction of the input shaft and part of the speed reducer overlaps with the motor in the axial direction. In particular, since a rotor yoke has a cup shape and has a rotor hub coupled to the input shaft, a rotor magnet and a stator core are more likely to be restricted in height in the axial direction, and thus an output of the motor is restricted.

Further, since the rotor yoke has the cup shape, if a fastening portion between the rotor hub and the input shaft is present, the axial height is likely to increase, which is not suitable in terms of rigidity for a structure that receives a load directly. On the other hand, in order to increase the rigidity, it is necessary to increase the thickness of the rotor yoke, so that reduction in thickness in the axial direction cannot be achieved.

### Solution to Problem

In response to the above issue, one or more aspects of the invention are directed to a speed reducer that aims to achieve an improvement of an output of a motor without much being restricted by axial heights of a rotor magnet and a stator core and a reduction in thickness in an axial direction, and a motor with a speed reducer having a compact and flat profile, which is provided by disposing the speed reducer concentrically with the motor.

In view of the above, the following embodiments are described below.

There is provided a speed reducer configured to output by rotating a gear mechanism at a reduced speed about an input shaft driven to rotate by a drive source, the speed reducer including: the input shaft configured to be driven to rotate by the drive source; an external gear configured to revolve around the input shaft; an output member provided with an internal gear to mesh with the external gear and configured to rotate at a relatively reduced speed via the internal gear when the external gear rotates, in which the input shaft is a rotor yoke having a cylindrical shape and provided with a rotor magnet on an inner peripheral surface thereof and the rotor yoke is used as an input to the external gear disposed radially outward thereof.

Accordingly, by driving the rotor yoke, being cylindrical, but not cup-shaped, to rotate, the rotor yoke can be used as an input to the external gear disposed radially outward thereof to rotate the output member provided with the internal gear at a relatively reduced speed without the necessity to use a rotor hub coupled to an input shaft, which has been required in the related art. Therefore, the reduction in thickness of the speed reducer in the axial direction is achieved.

In addition, since the output of a motor is improved without much being restricted by the axial heights of the rotor magnet and the stator core, and the rotary driving of the rotor yoke is used as an input to the external gears, the number of components of the speed reducer is reduced and thus a compact and flat profile is achieved.

A trochoid speed reducer is also applicable. The trochoid speed reducer includes the rotor yoke, the external gear and the internal gear arranged in the order presented in a radially outward direction, and a plurality of the external gears disposed in a trochoid tooth shape are rotated about the rotor yoke as an eccentric shaft to rotate the output member at a relatively reduced speed via the internal gear.

In this manner, the rotation of the rotor yoke is converted into rotational movements of the plurality of external gears reduced in speed, and the rotational movements of the external gears reduced in speed are transmitted via the internal gear to the output member disposed radially outward thereof, so that a rotation output reduced in speed is output from the output member. Therefore, a speed reducer having a flat shape is achieved.

A planetary speed reducer is also applicable. The planetary speed reducer includes: a tooth surface configured to mesh with the external gears on an outer peripheral surface of the rotor yoke, and the tooth surface of the rotor yoke and the external gears, and the rotor yoke, the external gears, and the internal gear are arranged in the order presented in a radially outward direction in a state in which the tooth surface of the rotor yoke meshes with the external gear and the external gear meshes with the internal gear, and the tooth surface on the outer peripheral surface of the rotor yoke rotates as a sun gear and the external gears revolve as planetary gears to cause the output member to rotate at a relatively reduced speed via the internal gear.

In this manner, the external gears meshing with the tooth surface on the outer peripheral surface of the rotor yoke as a sun gear and the internal gear meshing with the external gear can be assembled coaxially in a compact manner, so that the rotation output reduced in speed is output from the output member disposed radially outward thereof. Therefore, a speed reducer having a flat shape is achieved.

The motor with a speed reducer includes an outer rotor-type motor in which the input shaft of any one of the speed reducers described above is used as the rotor yoke, and a stator is disposed at a position inward of the rotor yoke.

Accordingly, a motor with a speed reducer provided with the speed reducer disposed concentrically with and radially outward of the outer rotor-type motor at a center is achieved, so that the reduction in thickness in the axial direction is achieved.

Further, since the motor is not much restricted by the axial height of the rotor magnet and the stator core, an improvement of the output of the motor is achieved even when the motor has the same size.

A rotor yoke having a cylindrical shape and being eccentric may be used as the input shaft, and a rolling bearing may be directly mounted on the rotor yoke.

Accordingly, since the rotor hub is not necessary in the rotor yoke, the reduction in thickness in the axial direction may be promoted.

In addition, since an inner diameter side or an outer diameter side of the rotor yoke having cylindrical shape is supported by the rolling bearing, a solid rotor shaft is not necessary, and the hollow shaft can be employed even in the outer rotor-type motor. When a hollow shaft is used, the shaft hole can be used for a wiring space or the like of a motor coil.

### Advantageous Effects of Invention

There are provided the speed reducer achieving an improvement of the output of the motor without much being restricted by the axial heights of the rotor magnet and the stator core and the reduction in thickness in the axial direction, and the motor with a speed reducer having a compact and flat profile by disposing the speed reducer concentrically with the motor.

### Brief Description of Drawings

Fig. 1 is a plan view of a motor with a speed reducer.
Fig. 2 is a cross-sectional view taken along a line A-A in Fig. 1.
Fig. 3 is a plan view of a motor with a speed reducer.
Fig. 4 is a plan view of a motor with a speed reducer according to another example.
Fig. 5 is a cross-sectional view taken along a line A-A in Fig. 4.

### Description of Embodiments

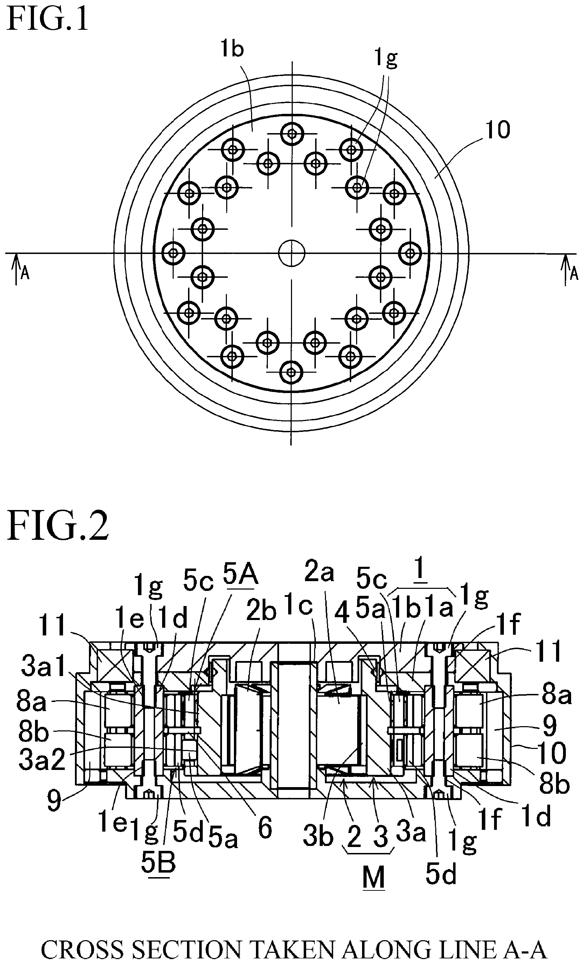

Referring now to attached drawings, an embodiment of a speed reducer and a motor with a speed reducer according to the present invention will be described. First, a schematic configuration of the motor with a speed reducer will be described with reference to Figs. 1 to 3. A DC brushless motor is used as the motor, and an outer rotor-type motor is used in this example.

As illustrated in Fig. 1 and Fig. 2, a motor housing 1 includes a housing body 1a and a motor cover 1b. A first hollow shaft 1c is provided at a center portion of the housing body 1a, and second hollow shafts 1d are provided at a plurality of positions along a circumferential direction on an outer peripheral side. A stator core 2a (laminated core) is inserted through the first hollow shaft 1c. The first hollow shaft 1c may be used as a wiring space for a lead wire wound around a coil 2b.

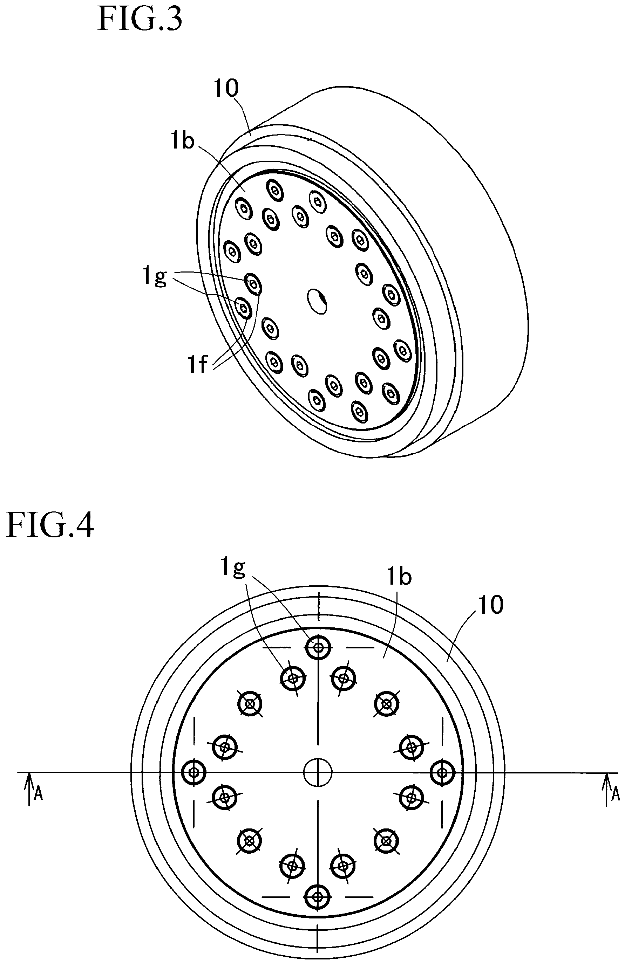

The second hollow shafts 1d are threaded on hole walls of shaft holes 1e. The housing body 1a and the motor cover 1b are provided respectively with screw holes If which communicate with the shaft holes 1e. By screwing screws 1g into the screw holes If, the housing body 1a and the motor cover 1b are integrally assembled (refer to Fig. 3).

An electric motor M (a drive source) is housed in the motor housing 1. An outer rotor-type motor provided with a stator 2 and a rotor 3 is used as the electric motor M. The first hollow shaft 1c of the housing body 1a is fitted into a stator core 2a and fixedly supported. The coil 2b is wound around pole teeth of the stator core 2a via an insulator.

The rotor 3 is provided on an outer periphery of the stator 2. An annular rotor magnet 3b is integrally assembled to an inner peripheral surface of a rotor yoke 3a having a cylindrical shape. The rotor magnet 3b is magnetized with N-poles and S-poles alternately in the circumferential direction, and is disposed so as to face the pole teeth of the stator core 2a. The rotor yoke 3a is used as an input shaft (an eccentric shaft) which is driven to rotate by the electric motor M. The rotor yoke 3a is rotatably supported by a first rolling bearing 4 provided at a boundary portion between the housing body 1a and the motor cover 1b. Further, the structure described above can make assembly easy.

It should be noted that the first rolling bearing 4 may be provided at a position radially outward of the rotor yoke 3a as illustrated in Fig. 1, or may be provided at a position inward thereof. Further, the first rolling bearings 4 may be provided on both sides of the rotor yoke 3a in an axial direction instead of being provided only on one side. Alternatively, the first rolling bearing 4 may be retained by only one of the housing body 1a and the motor cover 1b. It should be noted that the first rolling bearing 4 employed here is a four-point contact ball bearing having low frictional resistance, or a cross roller bearing when a load bearing capacity is required.

An outer peripheral surface of the rotor yoke 3a is provided with first and second eccentric cam portions 3a1, 3a2 formed in the axial direction. The first and second eccentric cam portions 3a1, 3a2 have the same eccentric amount with respect to an axis of the rotor yoke 3a, and are substantially 180 degrees out of phase with each other. A second rolling bearing 5A (upper side) abuts against an outer peripheral portion of the first eccentric cam portion 3a1, and a second rolling bearing 5B (lower side) abuts against an outer peripheral portion of the second eccentric cam portion 3a2 so as to be capable of being driven to rotate, respectively. The second rolling bearing 5A (upper side) is configured to sandwich rotating rollers 5a and retainers 5c between an inner ring side which is served by the outer peripheral portion of the first eccentric cam portion 3a1 and an outer ring 5d which abuts against an inner peripheral side of a first external gear 8a. The rotating rollers 5a and the retainers 5c are sandwiched alternately in the circumferential direction, and the rotating rollers 5a are rotatably supported by maintaining intervals of the rotating rolls 5a by the retainers 5c. The second rolling bearing 5B (lower side), the second eccentric cam portion 3a2, and a second external gear 8b are similar in configuration to the second rolling bearing 5A. A spacer 6 is provided to keep a distance in the axial direction between the first external gear 8a and the second external gear 8b. In other words, by employing the above-described structure in which the second rolling bearings 5A, 5B are used for the rotation of the rotor yoke 3a, the rotational movement of the first external gear 8a and the second external gear 8b is not hindered.

The first external gear 8a and the second external gear 8b are rotatably supported at positions radially outward of the spacer 6. The first external gear 8a and the second external gear 8b are provided so as to be capable of meshing with an internal gear 9 disposed on the outer peripheral side. The internal gear 9 is integrally assembled to the inner peripheral surface side of an output member 10 formed in a cylindrical shape to avoid disconnection in the axial direction. A center of rotation of the internal gear 9 coincides with the first hollow shaft 1c, and the tooth shapes of the first external gear 8a and the second external gear 8b are the trochoid tooth shape (external gear). The output member 10 is rotatably supported by a third rolling bearing 11 provided at a boundary portion between the housing body 1a and the motor cover 1b.

When the electric motor M starts, the rotor yoke 3a rotates in a state of being supported by the first rolling bearing 4, and the second rolling bearings 5A, 5B abutting against the outer peripheries of the first and second eccentric cam portions 3a1, 3a2 are driven to rotate. At this time, the second rolling bearings 5A, 5B oscillate in the radial direction by an amount of eccentricity of the first and second eccentric cam portions 3a1, 3a2, and the first external gear 8a and the second external gear 8b mesh with the internal gear 9 opposed thereto at a position shifted from each other by 180° in phase, thereby rotating in a predetermined direction.

In this manner, the external gears 8a, 8b having the trochoid tooth shape revolve around the rotor yoke 3a by the rotation of the rotor yoke 3a. At this time, the rotation of the external gears 8a, 8b at a reduced speed causes the output member 10 disposed radially outward thereof via the internal gear 9 to rotate at a relatively reduced speed, and a rotation output reduced in speed is output from the output member 10. It should be noted that the rotation output can be output from the motor cover 1b by fixing the output member 10 with a fixing member, not illustrated.

Accordingly, the rotor yoke 3a (eccentric shaft) uses a rotary drive of the rotor yoke 3a provided with a rotor magnet 3b on an inner peripheral surface thereof as an input to a trochoid tooth shape (external gears) and transmits the drive radially outward to the output member 10 provided with the internal gear 9 integrally assembled thereto. Therefore, an improvement of the output of the motor is achieved without much being restricted by the axial heights of the rotor magnet 3b and the stator core 2a, and the reduction in thickness of the speed reducer in the axial direction is achieved.

Further, since the rotary driving of the rotor yoke 3a is used as an input to the trochoid tooth shape (external gears), it is possible to make the speed reducer flat and compact by reducing components thereof.

Further, since the motor with a speed reducer provided with the speed reducer disposed concentrically with and radially outward of the outer rotor-type motor at a center is achieved, so that the reduction in thickness in the axial direction is achieved.

Further, since the output of the motor is not much restricted by the axial height of the rotor magnet 3b and the stator core 2a, an improvement of the motor output is achieved even when the motor has the same size.

In particular, since the rotor hub is not necessary in the rotor yoke 3a, the reduction in thickness in the axial direction may be promoted. Further, since the inner diameter side or the outer diameter side of the rotor yoke 3a having a cylindrical shape is supported by the first rolling bearing 4, the solid rotor shaft is not necessary, and the hollow shaft can be employed even in the outer rotor-type motor. When a hollow shaft is used, the shaft hole can be used for a wiring space or the like of a motor coil.

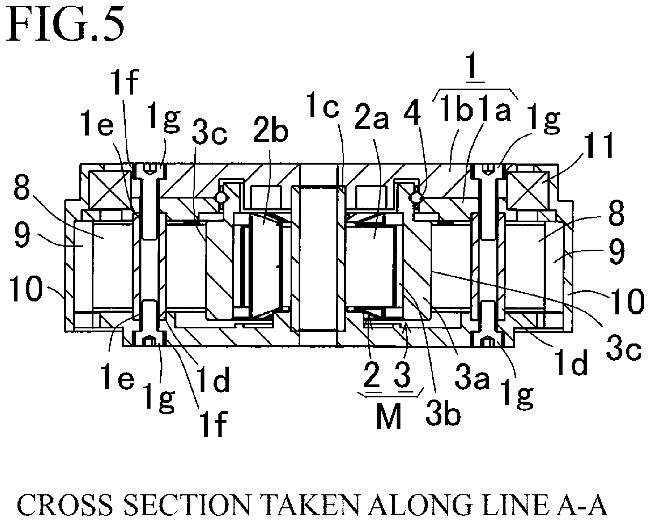

Next, another example of the motor with a speed reducer will be described with reference to Fig. 4 and Fig. 5. The same members as in Fig. 1 to Fig. 3 are denoted by the same reference numerals and description is incorporated.

Although the above-described speed reducer is a trochoid-type speed reducer, the type of the speed reducer is not limited thereto, and may be, for example, a planetary gear speed reducer.

In Fig. 4 and Fig. 5, a tooth surface 3c is formed on the outer peripheral surface of the rotor yoke 3a having cylindrical shape. The plurality of external gears 8 are constantly meshed with the tooth surface 3c. The plurality of external gears 8 are provided so as to be rotatable about the second hollow shafts 1d. The plurality of external gears 8 are constantly meshed with the internal gear 9. The internal gear 9 is provided integrally with the inner peripheral surface of the output member 10 to avoid disconnection.

When the electric motor M starts, the rotor yoke 3a rotates, and the tooth surface 3c on the outer peripheral surface of the rotor yoke 3a rotates as a sun gear and the plurality of external gears 8 revolve as planetary gears to cause the output member 10 provided with the internal gear 9 to rotate at a relatively reduced speed.

In this manner, the external gears 8 meshing with the tooth surface 3c on the outer peripheral surface of the rotor yoke 3a as a sun gear and the internal gear 9 meshing with the external gears 8 can be assembled coaxially in a compact manner, so that the rotation output reduced in speed is output from the output member 10 disposed radially outward thereof. Therefore, a speed reducer having a flat shape is achieved.

In the above described example, the outer rotor-type motor has been used for describing the electric motor M. However, the electric motor M may be an inner rotor-type motor. Besides the brushless motor, other types of motors such as a brushed motor or an ultrasonic motor or a drive source may also be used.

## Claims

1. A speed reducer configured to output by rotating a gear mechanism at a reduced speed about an input shaft driven to rotate by a drive source (M), the speed reducer comprising:
the input shaft configured to be driven to rotate by the drive source (M);
external gears (8a) (8b) configured to revolve around the input shaft; and
an output member (10) provided with an internal gear (9) to be meshed with the external gears (8a) (8b) and configured to rotate at a relatively reduced speed via the internal gear (9) when the external gears (8a) (8b) rotates,
wherein the input shaft is a rotor yoke (3a) having a cylindrical shape and provided with a rotor magnet (3b) on an inner peripheral surface thereof and the rotor yoke (3a) is used as an input to the external gears (8a) (8b) disposed radially outward of the rotor yoke (3a).

2. The speed reducer according to claim 1, wherein the speed reducer is a trochoid speed reducer, the trochoid speed reducer comprising the rotor yoke (3a), the external gears (8a) (8b), and the internal gear (9) arranged in the order presented in a radially outward direction, wherein the plurality of external gears (8a) (8b) disposed in a trochoid tooth shape are rotated about the rotor yoke (3a) as an eccentric shaft to rotate the output member (10) at a relatively reduced speed via the internal gear (9).

3. The speed reducer according to claim 1, wherein the speed reducer is a planetary speed reducer, the planetary speed reducer comprising a tooth surface (3c) configured to mesh with the external gears (8) on an outer peripheral surface of the rotor yoke (3a), wherein the rotor yoke (3a), the external gears (8) and the internal gear (9) are arranged in the order presented in a radially outward direction in a state in which the tooth surface (3c) of the rotor yoke (3a) meshes with the external gears (8) and the external gears (8) meshes with the internal gear (9), and the tooth surface (3c) on the outer peripheral surface of the rotor yoke (3a) rotates as a sun gear and the external gears (8) revolve as planetary gear to cause the output member (10) to rotate at a relatively reduced speed via the internal gear (9).

4. A motor with a speed reducer comprising an outer rotor-type motor, the outer rotor-type motor including an input shaft of the speed reducer according to any one of claims 1 to 3 as the rotor yoke (3a) and a stator (2) disposed at a position inward of the rotor yoke (3a).

5. The motor with a speed reducer according to claim 4, wherein the rotor yoke (3a) having a cylindrical shape and being eccentric is used as the input shaft, and a rolling bearing (4) is directly mounted on the rotor yoke (3a).
